# EUROPÄISCHE PATENTSCHRIFT

(11) **EP 3 706 976 B1**
(45) Veröffentlichungstag und Bekanntmachung des Hinweises auf die Patenterteilung: **15.12.2021**
(21) Anmeldenummer: 18795963.0
(22) Anmeldetag: 22.10.2018
(51) Int. Cl.: B29C 49/46, B29C 49/58, B29C 49/06, B29C 49/12, B29L 31/00, B65B 3/02, B67C 3/26

(54) **FORM- UND FÜLLSTATION EINER ANLAGE ZUM HERSTELLEN VON GEFÜLLTEN BEHÄLTERN AUS VORFORMLINGEN DURCH UNTER DRUCK IN DEN VORFORMLING EINGELEITETES FÜLLGUT**
MOLDING AND FILLING STATION OF A SYSTEM FOR MANUFACTURING FILLED CONTAINERS FROM PREFORMS BY MEANS OF FILLING MATERIAL INTRODUCED INTO THE PREFORM UNDER PRESSURE
POSTE DE FORMAGE ET DE REMPLISSAGE D'UNE INSTALLATION DESTINÉE À PRODUIRE DES RÉCIPIENTS REMPLIS À PARTIR DE PRÉFORMES GRÂCE À UN PRODUIT DE REMPLISSAGE INTRODUIT SOUS PRESSION DANS LA PRÉFORME

(30) Priorität: 07.11.2017 DE 102017010272
(43) Veröffentlichungstag der Anmeldung: 16.09.2020
(73) Patentinhaber: KHS Corpoplast GmbH, 22145 Hamburg (DE)
(72) Erfinder: BERGER, Frank, 22885 Barsbüttel (DE); JAISER, Benjamin, 20144 Hamburg (DE); LINKE, Michael, 22159 Hamburg (DE); BAUMGARTE, Rolf, 22926 Ahrensburg (DE); LITZENBERG, Michael, 21039 Börnsen (DE)
(74) Vertreter: Eisenführ Speiser
(86) Internationale Anmeldenummer: PCT/EP2018/078918
(87) Internationale Veröffentlichungsnummer: WO 2019/091768

(56) Entgegenhaltungen:
- EP-A1- 1 593 648
- US-A1- 2012 266 567
- US-A1- 2016 236 396
- US-A1- 2017 291 345

## Beschreibung

Die vorliegende Erfindung betrifft eine Form- und Füllstation einer Anlage zum Herstellen von gefüllten Behältern aus thermisch konditionierten Vorformlingen durch unter Druck in den Vorformling eingeleitetes flüssiges Füllgut.

Herkömmlich werden Behälter, insbesondere Flaschen, im Blasformverfahren durch ein unter Druck in einen vorgeheizten Vorformling einströmendes Formgas geformt und in einem zweiten Schritt mit einem Füllgut, insbesondere einem flüssigen Füllgut, befüllt.

Optimierte Verfahren, die in letzter Zeit entwickelt wurden, sehen vor, dass der vorgeheizte Vorformling nicht durch ein Druckgas, sondern durch unter Druck zugeführtes flüssiges Füllgut in einem Schritt geformt und gefüllt werden kann. Ein solches Verfahren ist z.B. aus der DE 10 2010 007 541 A1 bekannt.

Damit ein Vorformling in einen Behälter umgeformt werden kann, wird er thermisch konditioniert, also insbesondere erwärmt und mit einem geeigneten Temperaturprofil versehen. Dabei wird der Körper des Vorformlings z.B. auf ca. 120°C erwärmt und formbar, während der Mündungsbereich nur deutlich niedrigere Temperaturen erreichen darf, da der Vorformling am Mündungsbereich in der Form- und Füllmaschine gehalten wird und sich unter den dort üblichen Haltekräften nicht verformen darf. Für die thermische Konditionierung verfügt eine Vorrichtung zur Herstellung von gefüllten Behältern über eine Heizstrecke, entlang der die Vorformlinge geführt und dabei mit dem gewünschten Termperaturprofil versehen werden.

Der Formvorgang muss schnell erfolgen, damit die im Vorformling gespeicherte Wärme ausreicht, um den Vorformling bis zum Abschluss des Formvorgangs plastisch verformbar zu erhalten. Bei der Formung mit flüssigem Füllgut muss dem Vorformling das für den ausgeformten Behälter erforderliche Volumen deshalb unter hohem Druck und innerhalb eines kurzen Zeitintervalls zugeführt werden.

Der Vorformling muss während seiner Umformung in den Behälter außerdem geführt werden, damit eine gleichmäßige und kontrollierte Umformung stattfinden kann. Dies kann mit einer Reckstange geschehen, die während des Form- und Füllvorgangs eine Bewegung in Richtung der Längsachse des Behälters vollführt und dabei den Umformvorgang durch Druck auf den Boden des Vorformlings auslöst und anschließend durch Kontakt mit dem Bodenbereich die Umformung kontrolliert.

Bekannt ist, das Füllgut durch die Reckstange zuzuführen. Bei gattungsgemäßen Füllstationen ist allerdings vorgesehen, dass das Füllgut über einen die Reckstange mindestens teilweise umgebenden Flüssigkeitskanal zugeführt wird. Der Flüssigkeitskanal wird über ein steuerbares Füllventil mit unter Druck stehender Flüssigkeit versorgt und weist eine Auslassöffnung auf, die in dichtenden Eingriff mit der Mündung des Vorformlings bringbar ist dergestalt, dass das Füllgut an der Reckstange vorbei ohne Verluste ins Innere des Vorformlings gedrückt werden kann.

Allerdings kommt es nach Beendigung des Form- und Füllvorgangs leicht zu einem Nachtropfen von Füllgut aus der Auslassöffnung. Das Füllventil, mit dem der Füllgutstrom gesteuert wird, ist dann zwar geschlossen, aber es befindet sich noch stromabwärts davon restliches Füllgutvolumen, das herauslaufen kann.

Die EP 1 593 648 A1 zeigt ein Füllventil für das Befüllen fertiger Behälter. Oberhalb des Ventilsitzes des Füllventils ist eine Gassperre angeordnet. Ein Abtropfen von Füllgut, das zwischen Füllventil und Auslassöffnung verbleibt, vermag diese Gassperre nicht zu verhindern.

Aus der DE 10 2010 007 541 A1, der US 2012/0266567 A1 und der US 2013/0313761 A1 ist bereits bekannt, das Nachtropfen von Füllmedium auf mechanischem Wege dadurch zu minimieren, dass im Strömungsweg für das Füllmedium ein Rückschlagventil angeordnet wird. Dieses Rückschlagventil schließt federkraftbelastet, sobald die Federkraft den Strömungsdruck des Füllgutes auf das Rückschlagelement des Rückschlagventils übersteigt. Die nachveröffentlichte DE 10 2016 009 208 A1 zeigt eine Nachtropfverhinderung mittels einer Gassperre, die innerhalb einer Reckstange abgeordnet ist.

Das Nachtropfen von Füllgut führt zu einer Verunreinigung der Form- und Füllstation und zu Füllgutverlusten. Außerdem ist die Form- und Füllstation nicht sofort mit vollem Druck einsatzbereit. Nach dem Öffnen des Füllventils muss erst das Kanalvolumen mit Füllgut versorgt werden. Dazu muss darin befindliche Luft zunächst verdrängt werden, bevor der volle hydraulische Druck durch das Füllgut aufgebaut werden kann.

Es ist Aufgabe der vorliegenden Erfindung, eine Form- und Füllstation einer Anlage zum Herstellen von gefüllten Behältern aus Vorformlingen durch unter Druck in den Vorformling eingeleitetes flüssiges Füllgut, die eine Reckstange umfasst, derart fortzubilden, dass es nicht zu Füllgutverlusten oder Kontaminierungen durch nachtropfendes Füllgut kommt.

Die Aufgabe wird gelöst durch eine Form- und Füllstation einer Anlage zum Herstellen von gefüllten Behältern aus Vorformlingen durch unter Druck in den Vorformling eingeleitetes flüssiges Füllgut, umfassend eine Reckstange und einen Flüssigkeitskanal, der durch ein Füllventil steuerbar ist und der die Reckstange zumindest teilweise umgibt und in einer mit der Mündung des Vorformlings in Eingriff bringbaren Auslassöffnung endet.

Erfindungsgemäß ist vorgesehen, dass im Flüssigkeitskanal zwischen Füllventil und Auslassöffnung eine Gassperre angeordnet ist.

Der Begriff Gassperre bezeichnet ein im Flüssigkeitskanal angeordnetes Element, das durch geeignete Dimensionierung oder Aufteilung des freien Strömungsquerschnitts des Flüssigkeitskanals verhindert, dass Luft in den Abschnitt des Flüssigkeitskanal stromaufwärts der Gassperre eindringen kann. Ein mechanisches Verschließen des Strömungsweges ist dazu im Gegensatz zum Rückschlagventil der DE 10 2010 007 541 A1 nicht erforderlich. Einer Gassperre liegt nämlich die Erkenntnis zugrunde, dass eine Flüssigkeit, die sich drucklos in einer Leitung befindet, aufgrund ihrer Oberflächenspannung im Zusammenwirken mit dem Umgebungsdruck nicht mehr aus der Leitung herausläuft, sofern die Auslassöffnung der Leitung nur klein genug ist. Die Oberflächenspannung verhindert dann die Tropfenbildung. Die Sperrwirkung der Gassperre beruht also einzig auf der Oberflächenspannung der Flüssigkeit.

Eine Gassperre kann deshalb beispielsweise aus einer Mehrzahl von Sieb- oder Strömungskanälen bestehen, die den Gesamtquerschnitt des Kanals auf mehrere kleinere Querschnitte aufteilen, so dass jeder einzelne Querschnitt klein genug ist, um die gewünschte Wirkung zu erzielen.

Die Gassperre kann insbesondere runde oder mehreckige Querschnittsflächen aufweisen, insbesondere dreieckige oder sechseckige Querschnittsflächen.

Die Gassperre kann Kanäle mit einer koaxialen Anordnung bilden. Vorzugsweise ist dabei die Länge eines Kanals größer als der Durchmesser seiner Querschnittsfläche. So wird sichergestellt, dass die Flüssigkeit in den Kanälen einen längeren Weg zurücklegen muss, bevor der Kanal gasdurchlässig wird. Durch z.B. Temperaturänderungen hervorgerufene Druckschwankungen können so kompensiert werden, ohne dass die Wirkung der Gassperre leidet.

Welche Dimensionen und Relationen zwischen Kanaldurchmesser und Kanallänge geeignet sind, hängt maßgeblich vom Füllgut und dessen Oberflächenspannung ab. Der Fachmann kann geeignete Abmessungen leicht theoretisch oder experimentell ermitteln.

Vorteilhaft ist die Gassperre unmittelbar vor der Auslassöffnung des Strömungskanals angeordnet. Unmittelbar soll hier bedeuten, dass das zwischen der Gassperre und der Auslassöffnung verbleibende Flüssigkeitsvolumen vernachlässigbar gering ist. Das aus der Auslassöffnung möglicherweise noch austretende Füllgut kann so minimiert werden. Denkbar ist natürlich auch, dass die Gassperre direkt in der Auslassöffnung angeordnet ist.

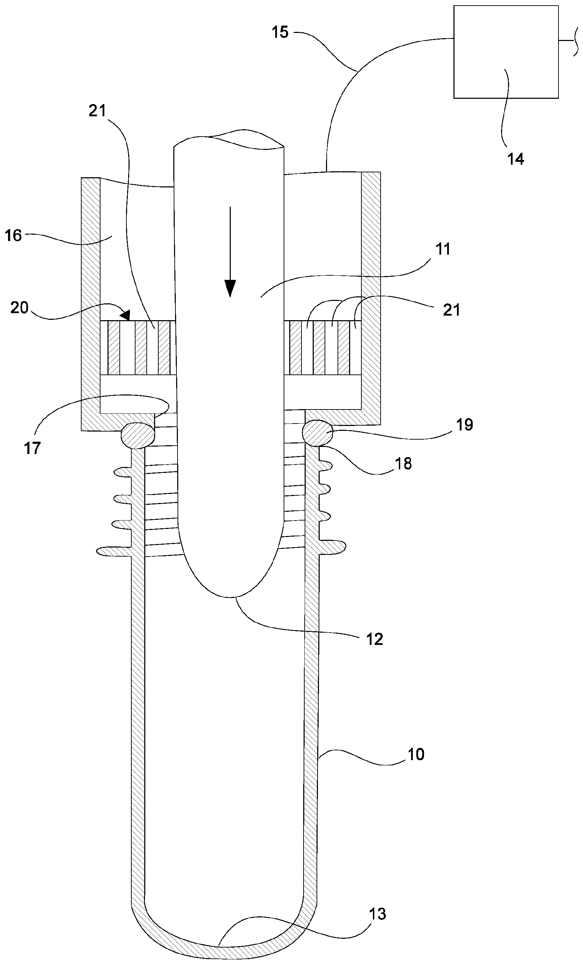

Die Erfindung soll nachfolgend anhand einer Abbildung näher erläutert werden. Der grundsätzliche Aufbau einer solchen Maschine kann dabei wie in der DE 10 2010 007 541 A1 beschrieben ausgeführt sein, auf die und auf deren Offenbarung zur Vermeidung einer erneuten wiederholten Beschreibung insgesamt explizit Bezug genommen wird, insbesondere auf die Figur 1 und deren Beschreibung in den Absätzen [0028] bis [0035].

Die einzige Figur zeigt schematisch die wesentlichen Elemente einer Form- und Füllstation im Kontext einer Maschine zum simultanen Formen und Füllen von Behältern.

Die Figur versteht sich als Veranschaulichung des Prinzips der Erfindung. Sie ist vereinfacht dargestellt und umfasst nur die zur Veranschaulichung der Erfindung erforderlichen Bauteile. Die Größenrelationen der einzelnen Bauteile zueinander kann ein Fachmann mit seinem Fachwissen ohne weiteres verändern oder den konkreten Bedürfnissen anpassen.

Gezeigt ist in der Figur ein Längsschnitt durch einen Vorformling 10, in den eine Reckstange 11 eingeführt wird. Die Reckstange 11 dient der mindestens zeitweisen Führung und Streckung des Vorformlings 10 während seiner Umformung zum Behälter. Typischerweise erfolgt zunächst ein Kontakt zwischen dem freien Ende 12 der Reckstange 11 und dem Boden 13 des Vorformlings 10. Bei einem weiteren Einfahren der Reckstange 11 in den Vorformling 10 hinein wird eine Längsreckung des Vorformlings 10 verursacht. Nach Abschluss des Reckvorganges oder auch bereits während der Durchführung des Reckvorganges wird über ein Füllventil 14 Füllgut 15 durch einen die Reckstange 11 umgebenden Flüssigkeitskanal 16 in den Vorformling 10 eingeleitet. Der Flüssigkeitsstrom kann durch das Füllventil 14 gesteuert werden.

Der die Reckstange 11 in Form eines Ringkanals umgebende Flüssigkeitskanal 16 weist eine Auslassöffnung 17 auf, die auf die Mündung 18 des Vorformlings 10 aufsetzbar ist. Zwischen Auslassöffnung 17 und Mündung 18 ist eine Dichtung 19 vorgesehen, die sicherstellt, dass beim Einleiten des Füllguts 15 in den Vorformling 10 keine Flüssigkeit zwischen Auslassöffnung 17 und Mündung 18 austritt.

Im dargestellten Fall ist die Dichtung 19 als ein O-Ring ausgebildet.

Eine Entlüftung des Vorformlings 10 kann unter Verwendung eines nicht dargestellten Entlüftungsventils erfolgen.

Wie erwähnt strömt das Füllgut 15 bei geöffnetem Füllventil durch die Auslassöffnung 17 in den Vorformling 10 ein. Um sicherzustellen, dass nach dem Schließen des Füllventils 14 kein Füllgut 15 mehr den Flüssigkeitskanal 16 verlässt, also kein Nachtropfen aus der dann druckfreien Leitung erfolgt, ist erfindungsgemäß in vor der Auslassöffnung 17 eine Gassperre 20 angeordnet.

Die Gassperre 20 umgibt die Reckstange 11 und weist mehrere Kanäle 21 mit z.B. rundem Querschnitt auf.

Im gezeigten Ausführungsbeispiel beträgt die Länge der Kanäle 21 jeweils ein Mehrfaches ihrer Durchmesser, was wie oben ausgeführt die Effektivität der Gassperre 20 im Vergleich zu z.B. einem ebenfalls als Gassperre denkbaren Sieb deutlich erhöht.

Welche Dimensionen und Relationen zwischen Kanaldurchmesser und Kanallänge geeignet sind, hängt maßgeblich vom Füllgut und dessen Oberflächenspannung ab. Der Fachmann kann geeignete Abmessungen leicht theoretisch oder experimentell ermitteln.

In nicht dargestellter Weise kann die Zuführung des Füllgutes in den Vorformling hinein zusätzlich auch durch die Reckstange 11 hindurch erfolgen, um den verfügbaren Zuführquerschnitt zu vergrößern. Auch diese Zuführung erfolgt ventilbeherrscht und auch bezüglich des Zuführkanals für das Füllgut innerhalb der Reckstange ist es vorteilhaft, wenn dieser auslassseitig mit einer Gassperre versehen ist, wie sie bezüglich des die Reckstange umgebenen Flüssigkeitskanales beschrieben und beansprucht wurde. Die anspruchsgemäßen Merkmale können auch für diese Gassperre im Zuführkanal in der Reckstange mit Vorteil vorgesehen sein.

## Patentansprüche

1. Form- und Füllstation einer Anlage zum Herstellen von gefüllten Behältern aus Vorformlingen (10) durch unter Druck in den Vorformling (10) eingeleitetes flüssiges Füllgut (15), umfassend eine Reckstange (11) und einen Flüssigkeitskanal (16), der durch ein Füllventil (14) steuerbar ist und der die Reckstange (11) zumindest teilweise umgebend ausgebildet ist und in mindestens einer auf die Mündung (18) des Vorformlings aufsetzbaren Auslassöffnung (17) endet, **dadurch gekennzeichnet, dass** im Flüssigkeitskanal (16) zwischen Füllventil (14) und Auslassöffnung (17) eine Gassperre (20)) angeordnet ist.

2. Form- und Füllstation nach Anspruch 1, **dadurch gekennzeichnet, dass** die Gassperre (20) den Querschnitt des Flüssigkeitskanals (16) auf eine Mehrzahl von Kanälen (21) aufteilt.

3. Form- und Füllstation nach Anspruch 2, **dadurch gekennzeichnet, dass** die Gassperre (20) Kanäle (21) mit runden oder mehreckigen Querschnittsflächen aufweist, insbesondere dreieckige oder sechseckige Querschnittsflächen.

4. Form- und Füllstation nach einem der Ansprüche 1 bis 3, **dadurch gekennzeichnet, dass** die Gassperre (20) Kanäle (21) mit einer koaxialen Anordnung bildet.

5. Form- und Füllstation nach Anspruch 4, **dadurch gekennzeichnet, dass** die Länge eines Kanals (21) größer als der Durchmesser seiner Querschnittsfläche ist.

6. Form- und Füllstation nach einem der Ansprüche 1 bis 5, **dadurch gekennzeichnet, dass** die Gassperre (20) unmittelbar vor der Auslassöffnung (17) angeordnet ist.

## Claims

1. Forming and filling station of a system for manufacturing filled containers from preforms (10) via liquid filling material (15) introduced under pressure into the preform (10), comprising a stretching bar (11) and a liquid channel (16), which can be controlled by a filling valve (14) and which at least partially surrounds the stretching bar (11) and ends in at least one outlet opening (17) that can be attached to the mouth (18) of the preform, **characterized in that** a gas barrier (20) is arranged in the liquid channel (16) between filling valve (14) and outlet opening (17).

2. Forming and filling station according to Claim 1, **characterized in that** the gas barrier (20) divides the cross-section of the liquid channel (16) into a plurality of channels (21).

3. Forming and filling station according to Claim 2, **characterized in that** the gas barrier (20) comprises channels (21) with round or multi-angular cross-sectional surfaces, in particular, triangular or hexagonal cross-sectional surfaces.

4. Forming and filling station according to any one of Claims 1 to 3, **characterized in that** the gas barrier (20) forms channels (21) with a coaxial arrangement.

5. Forming and filling station according to Claim 4, **characterized in that** the length of a channel (21) is greater than the diameter of its cross-sectional area.

6. Forming and filling station according to any one of the Claims 1 to 5, **characterized in that** the gas barrier (20) is arranged immediately before the outlet opening (17).

## Revendications

1. Station de moulage et de remplissage équipant une ligne de production de récipients remplis à partir de préformes (10) à l'aide d'un produit de remplissage liquide (15) introduit sous pression dans la préforme (10), comprenant une barre d'étirage (11) et un conduit (16) pour liquide pouvant être commandé par une valve de remplissage (14) et entourant, en partie au moins la barre d'étirage (11) et aboutissant dans au moins un orifice de sortie (17) pouvant être appliqué sur l'embouchure (18) de la préforme, **caractérisé en ce qu'**une barrière aux gaz (20) est agencée dans le conduit pour liquide (16) entre la valve de remplissage (14) et l'orifice de sortie (17).

2. Station de moulage et de remplissage selon la revendication 1, **caractérisée en ce que** la barrière aux gaz (20) subdivise la section du conduit pour liquide (16) en une pluralité de canaux (21).

3. Station de moulage et de remplissage selon la revendication 2, **caractérisée en ce que** la barrière aux gaz (20) présente des canaux (21) de section ronde ou polygonale, notamment de section triangulaire ou hexagonale.

4. Station de moulage et de remplissage selon l'une des revendications 1 à 3, **caractérisée en ce que** la barrière aux gaz (20) forme des canaux (21) d'agencement coaxial.

5. Station de moulage et de remplissage selon la revendication 4, **caractérisée en ce que** la longueur d'un canal (21) est supérieure au diamètre de sa section.

6. Station de moulage et de remplissage selon l'une des revendications 1 à 5, **caractérisée en ce que** la barrière aux gaz (20) est agencée directement devant l'orifice de sortie (17).
